# EUROPÄISCHE PATENTSCHRIFT

(11) **EP 3 998 180 B1**
(45) Veröffentlichungstag und Bekanntmachung des Hinweises auf die Patenterteilung: **14.10.2026**
(21) Anmeldenummer: 21213784.8
(22) Anmeldetag: 01.08.2019
(51) Int. Cl.: B60S 1/04, B60S 1/40

(54) **ADAPTEREINHEIT UND WISCHVORRICHTUNG**
ADAPTER UNIT AND WIPING DEVICE
UNITÉ D'ADAPTATEUR ET DISPOSITIF ESSUIE-GLACE

(30) Priorität: 26.09.2018 DE 102018216452
(43) Veröffentlichungstag der Anmeldung: 18.05.2022
(62) Dokumentnummer(n) der früheren Anmeldung(en) nach Art. 76 EPÜ: 19749321.6 / 3 856 582
(73) Patentinhaber: Robert Bosch GmbH, 70442 Stuttgart (DE)
(72) Erfinder: Depondt, Helmut, 3370 Boutersem (BE); Truyens, Stijn, 3300 Tienen (BE); Kraemer, Godelieve, 76549 Huegelsheim (DE); Kruse, Michael, 76547 Sinzheim (DE); Bubba, Marcello, 3210 Linden (BE); Bratec, Herve, 3500 Sint-Lambrechts-Merk (BE)

(56) Entgegenhaltungen:
- DE-A1- 102014 208 149
- DE-A1- 102016 211 162
- US-A1- 2015 096 142

## Beschreibung

Die Erfindung betrifft eine Adaptereinheit, die zu einer Kopplung, insbesondere lösbaren Kopplung eines Wischblatts mit einem Wischarm vorgesehen ist nach Gattung des unabhängigen Anspruchs. Die Erfindung betrifft weiterhin auch eine Wischvorrichtung mit einer solchen Adaptereinheit.

### Stand der Technik

Es sind bereits Wischvorrichtungen umfassend einen Wischarm und ein Wischblatt sowie eine Adaptereinheit zur lösbaren Kopplung eines Wischarms mit einem Wischblatt vorgeschlagen worden. Solche Wischvorrichtungen haben den Nachteil, dass der Wischarm stets eine hohe Anpresskraft zum Andrücken des Wischblatts an eine Fahrzeugscheibe aufbringen muss, um eine ausreichende Wischleistung zu gewährleisten.

Dokument DE 10 2016 211162 A1 offenbart eine gattungsgemäße Adaptereinheit, die zu einer lösbaren Kopplung eines Wischblatts mit einem Wischarm vorgesehen ist.

### Offenbarung der Erfindung

### Vorteile

Die vorliegende Erfindung beschreibt eine Adaptereinheit, die zu einer Kopplung, insbesondere lösbaren Kopplung eines Wischblatts mit einem Wischarm vorgesehen ist, aufweisend eine Windabweiserfläche, welche dazu eingerichtet ist, eine anströmende Luft abzuweisen und das Wischblatt an eine Fahrzeugscheibe zu drücken, und aufweisend ein Schwenklager, welches dazu eingerichtet ist, den Wischarm gegenüber dem Wischblatt schwenkbar zu lagern, wobei das Schwenklager wenigstens zwei weitgehend senkrecht auf einer Adaptergrundfläche angeordnete Säulen aufweist, wobei jede der Säulen jeweils einen Gelenkbolzen aufweist, welcher parallel oder weitgehend parallel zu einer Lagerachse ausgerichtet ist und zur Lagerung des Wischarms und/oder einer Wischarmadaptereinheit vorgesehen ist, und wobei die Adaptereinheit wenigstens zwei auf der Adaptergrundfläche angeordnete Stützelemente aufweist, welche dazu eingerichtet sind, die Windabweiserfläche zu stützen bzw. mechanisch zu kontaktieren, wobei das Schwenklager zumindest weitgehend zwischen den wenigstens zwei Stützelementen angeordnet ist und wenigstens ein erstes Stützelement von den wenigstens zwei Stützelement als eine Verliersicherung der Adaptereinheit am Wischarm, insbesondere bei einem Versagen von einem Fixiermittel, eingerichtet ist. Erfindungsgemäß hat ein wischarmabgewandtes Stützelement der wenigstens zwei Stützelement eine geringere Höhe als ein wischarmzugewandtes Stützelement der wenigstens zwei Stützelemente, insbesondere entspricht eine jeweilige Höhe der wenigstens zwei Stützelemente einem Höhenverlauf der Windabweiserfläche.

Das hat den Vorteil, dass durch die Höhen des wischarmzugewandten Stützelements und des wischarmabgewandten Stützelements die Windabweiserfläche so positioniert werden kann, dass sie bei schneller Fahrt aufgrund des sie anströmenden Fahrtwinds das Wischblatt an die Fahrzeugscheibe presst. Das erhöht eine Gesamtanpresskraft des Wischblatts an die Fahrzeugscheibe und verbessert die Wischleistung. Die benötigte Anpresskraft, mit welcher der Wischarm das Wischblatt an die Fahrzeugscheibe presst, wird auf diese Weise reduziert. Es kann ein günstigerer und/oder einfacherer und/oder zuverlässigerer und/oder kompakterer Wischarm mit einer geringeren Anpresskraft verwendet werden, insbesondere mit einer kleineren Feder zum Aufbringen der Anpresskraft. Weiterhin wird durch die Verwendung einer Wlndabweiserfläche gemäß der vorliegenden Erfindung verhindert, dass die Adaptereinheit bzw. eine Wischvorrichtung - umfassend die Adaptereinheit, das Wischblatt und den Wischarm - durch eine ungünstige Aerodynamik bei schneller Fahrt eine Kraft generiert, welche der benötigten Anpresskraft entgegengesetzt ist und so die Wischleistung verschlechtern würde oder sogar ein Wischen unmöglich machen würde. Durch die Adaptereinheit gemäß der vorliegenden Erfindung wird sichergestellt, dass aufgrund von aerodynamischen Effekten, insbesondere einem Wind, insbesondere Fahrtwind, eine resultierende Kraft das Wischblatt auf die Fahrzeugscheibe drückt. Dadurch, dass die erste Teilfläche und die zweite Teilfläche jeweils eine andere Geometrie und/oder eine andere Ausrichtung aufweisen, ist eine präzise Einstellung von Anpresskräften möglich, insbesondere einer Ausrichtung der Anpresskräfte.

Vorteilhaft ist die Adaptereinheit mit der Windabweiserfläche einstückig ausgebildet. Unter einstückig soll in diesem Zusammenhang insbesondere stoffschlüssig verbunden, wie beispielsweise durch einen Schweißprozess und/oder einen Klebeprozess usw. und besonders vorteilhaft angeformt verstanden werden, wie durch die Herstellung aus einem Guss und/oder durch die Herstellung in einem Ein- oder Mehrkomponentenspritzverfahren. Vorteilhaft ist die Adaptereinheit mit dem Schwenklager einstückig ausgebildet.

Die Adaptergrundfläche ist im einem am Fahrzeug montierten Zustand der Adaptereinheit bevorzugt parallel oder weitgehend parallel zur Fahrzeugscheibe ausgerichtet.

Unter weitgehend parallel bzw. darunter, dass eine erste Achse weitgehend parallel zu einer zweiten Achse angeordnet ist, soll insbesondere verstanden werden, dass die erste Achse mit der zweiten Achse einen Winkel einschließt, der nicht mehr als 8°, vorteilhaft nicht mehr als 5°, besonders vorteilhaft nicht mehr als 2° von 0° abweicht.

Unter weitgehend senkrecht bzw. darunter, dass eine erste Achse weitgehend senkrecht zu einer zweiten Achse angeordnet ist, soll verstanden werden, dass eine erste Achse mit einer zweiten Achse einen Winkel einschließt, der nicht mehr als 8°, vorteilhaft nicht mehr als 5°, besonders vorteilhaft nicht mehr als 2° von 90° abweicht.

Vorteilhaft ist die Adaptereinheit mit der Adaptergrundfläche einstückig ausgebildet. Vorteilhaft ist die Adaptergrundfläche mit den wenigstens zwei Säulen einstückig ausgebildet ist. Vorteilhaft wenigstens eine der wenigstens zwei Säulen mit ihrem Gelenkbolzen einstückig ausgebildet. Vorteilhaft ist die Adaptergrundfläche mit wenigstens einem der wenigstens zwei Stützelemente einstückig ausgebildet.

Darunter, dass eine Säule bzw. ein Stützelement vertikal auf der Adaptergrundfläche angeordnet ist, soll insbesondere verstanden werden, dass die Säule bzw. das Stützelement entlang ihrer Länge bzw. ihrer größten Längsausdehnung senkrecht zur Adaptergrundfläche angeordnet ist. Eine Höhe einer Säule bzw. eines Stützelements wird bevorzugt senkrecht zur Adaptergrundfläche gemessen.

Gemäß der Erfindung ist das Schwenklager so ausgebildet, dass die Lagerachse senkrecht oder weitgehend senkrecht zu einer Wischarmrichtung angeordnet ist. Unter einer Wischarmrichtung soll eine Richtung verstanden werden, welche in Richtung einer größten Längsausdehnung des an der Adaptereinheit montierten Wischarms angeordnet ist, insbesondere in einer Grundstellung. Im unmontierten Zustand ist die Wischarmrichtung die Richtung an der Adaptereinheit, in die ein montierter Wischarm zeigen würde, insbesondere in einer Grundstellung. Vorteilhaft ist die Lagerachse parallel oder weitgehend parallel zu einer vorgesehenen Wischrichtung angeordnet. Vorteilhaft ist die Lagerachse so angeordnet, dass sie in einem nicht wischenden Ruhezustand der an der Fahrzeugscheibe angebrachten Wischvorrichtung - umfassend die Wischarmadaptereinheit, das Wischblatt und den Wischarm - parallel oder weitgehend parallel zu einer Windanströmrichtung bzw. zur einer Fahrzeugfahrrichtung angeordnet ist. Im Folgenden soll unter einer Windanströmrichtung die Richtung verstanden werden, in der der Fahrtwind in einem nicht wischenden Ruhezustand der an der Fahrzeugscheibe angebrachten Wischvorrichtung anströmen würde. Besonders vorteilhaft liegt die Lagerachse in einem am Fahrzeug montierten Zustand parallel zur Fahrzeugscheibe, bevorzugt an jeder Position über eine Wischbewegung.

Durch die in den Unteransprüchen aufgeführten Merkmale sind vorteilhafte Weiterbildungen der Adaptereinheit möglich.

Schließt die Windabweiserfläche einen Hauptwinkel zwischen 25° und 65°, bevorzugt zwischen 40° und 50° mit der Lagerachse ein, werden gute aerodynamische Eigenschaften der Adaptereinheit mit einem ausreichend großem Baumraum der Adaptereinheit ermöglicht, insbesondere für eine Unterbringung des Schwenklagers.

Unter einen Hauptwinkel ist der Winkel zu verstehen, den die Windabweiserfläche zur Lagerachse aufweist. Vorteilhaft wird der Hauptwinkel um die Wischarmrichtung gemessen. Ein positiver Hauptwinkel zwischen 0° und 90° beschreibt dabei eine Windabweiserfläche, welche wenigstens teilweise zur Windanströmrichtung zugewendet ist. Je näher der Hauptwinkel an 90°, umso stärker ist die Windabweiserfläche der Windanströmrichtung zugewendet. Vorteilhaft wird der Hauptwinkel zwischen der Lagerachse und einer Projektion der Lagerachse auf die Windabweiserfläche aufgespannt, wobei die Projektion vorteilhaft entlang einer Projektionsebene durchgeführt wird, in welcher die Lagerachse liegt und welche senkrecht oder weitgehend senkrecht zur Wischarmrichtung angeordnet ist. Es ist auch möglich, dass die Projektionsebene durch die Lagerachse und einen Normalenvektor bzw. einen mittleren Normalenvektor der Windabweiserfläche aufgespannt wird. Bei einer gekrümmten bzw. nicht ebenen Windabweiserfläche ist es denkbar, dass der Hauptwinkel zwischen der Lagerachse und einer Tangentialebene aufgespannt ist, wobei die Tangentialebene in einem ausgezeichneten Punkt - beispielsweise dem Mittelpunkt - der Windabweiserfläche liegt oder die Tangentialebene eines mittleren Normalenvektors der Windabweiserfläche ist. Unter einem mittleren Normalenvektor ist ein Vektor zu verstehen, der das Mittel über alle oder fast alle Normalenvektoren der Windabweiserfläche darstellt.

Weist wenigstens eine der wenigstens zwei Säulen eine Höhe auf, deren Wert zwischen der Höhe des wischarmabgewandten Stützelements und der Höhe des wischarmzugewandten Stützelements liegt, entspricht insbesondere die Höhe der wenigstens einen der wenigstens zwei Säulen einem Höhenverlauf der Windabweiserfläche, kann die Windabweiserfläche aerodynamisch besonders günstig positioniert werden.

Besonders vorteilhaft ist es, wenn die jeweiligen Oberseiten des wischarmzugewandten Stützelements und/oder des wischarmabgewandten Stützelements und/oder wenigstens einer der wenigstens zwei Säulen wenigstens abschnittsweise auf einem ersten Kreisbogen mit einem ersten Radius zwischen 10 cm und 35 cm, bevorzugt zwischen 15 cm und 30 cm, besonders bevorzugt zwischen 20 cm und 25 cm angeordnet sind, wobei eine erste Kreisfläche des ersten Kreisbogens bevorzugt senkrecht oder weitgehend senkrecht zur Lagerachse angeordnet ist. Auf diese Weise kann die Adaptereinheit besonders aerodynamisch günstig gestaltet werden. Dabei ist der erste Kreisbogen insbesondere ein gedachter Kreisbogen. Bevorzugt ist die erste Kreisfläche eine gedachte Kreisfläche, welche insbesondere den ersten Kreisbogen aufweist.

Die Aerodynamik der Adaptereinheit wird weiter verbessert, wenn die jeweiligen Oberseiten des wischarmzugewandten Stützelements und/oder des wischarmabgewandten Stützelements und/oder von wenigstens einer der wenigstens zwei Säulen wenigstens abschnittsweise auf einem zweiten Kreisbogen mit einem zweiten Radius zwischen 10 mm und 35 mm, bevorzugt zwischen 15 mm und 30 mm, besonders bevorzugt zwischen 20 mm und 25 mm angeordnet sind, wobei eine zweite Kreisfläche des zweiten Kreisbogens bevorzugt parallel oder weitgehend parallel zur Lagerachse angeordnet ist, besonders bevorzugt senkrecht oder weitgehend senkrecht zu einer Wischarmrichtung angeordnet ist. Dabei ist der zweite Kreisbogen insbesondere ein gedachter Kreisbogen. Bevorzugt ist die zweite Kreisfläche eine gedachte Kreisfläche, welche insbesondere den zweiten Kreisbogen aufweist.

Überragt eine Oberseite des als Verliersicherung eingerichteten Stützelements wenigstens einen Gelenkbolzen der wenigstens zwei Säulen um einen Höhenversatz von wenigstens 2 mm, bevorzugt wenigstens 4 mm, besonders bevorzugt wenigstens 6 mm, ermöglicht das eine besonders komfortable Bedienung der Adaptereinheit. Ein solcher Höhenversatz ermöglicht zusätzlich eine besonders zuverlässige Funktion der Verliersicherung.

Das Schwenklager weist eine V-förmige Aussparung auf, welche zur Führung bzw. zur Stützung und/oder mechanischen Kontaktierung des Wischarms vorgesehen ist. Der Wischarm ist somit besonders stabil mit der Adaptereinheit koppelbar. Vorteilhaft ist die V-förmige Aussparung zwischen den wenigstens zwei Säulen angeordnet. Unter einer V-förmigen Aussparung ist insbesondere eine Kontaktfläche zu verstehen. Beispielsweise kann das Schwenklager eine Stützwand, insbesondere eine senkrecht oder weitgehend senkrecht zur Wischarmrichtung angeordnete Stützwand aufweisen, welche die V-förmige Aussparung aufweist. Beispielsweise kann die V-förmige Aussparung eine Einkerbung in der Stützwand sein.

Der Wischarm ist besonders sicher befestigbar, wenn die Gelenkbolzen der wenigstens zwei Säulen zueinander ausgerichtet sind. Insbesondere soll darunter, dass die Gelenkbolzen der wenigstens zwei Säulen zueinander ausgerichtet sind, verstanden werden, dass sich ein erster Gelenkbolzen einer ersten Säule aus der ersten Säule heraus in Richtung einer zweiten Säule erstreckt und sich ein zweiter Gelenkbolzen der zweiten Säule aus der zweiten Säule heraus in Richtung der ersten Säule erstreckt. Bevorzugt sind die Gelenkbolzen parallel oder weitgehend parallel zur Lagerachse ausgerichtet. Beispielsweise kann die erste Säule die windzugewandte Säule sein. Beispielsweise kann die zweite Säule die windabgewandte Säule sein.

In einer Variante ist es denkbar, dass die Gelenkbolzen voneinander weggerichtet sind. Insbesondere kann sich der erste Gelenkbolzen der ersten Säule aus der ersten Säule heraus in entgegengesetzter Richtung zu der zweiten Säule erstreckt und sich der zweite Gelenkbolzen der zweiten Säule aus der zweiten Säule heraus in entgegengesetzter Richtung zu der ersten Säule erstrecken. In weiteren Varianten ist es möglich, dass die Gelenkbolzen in eine gleiche Richtung ausgerichtet sind, insbesondere parallel oder weitgehend parallel zur Lagerachse. Beispielsweise ist es möglich, dass sich der erste Gelenkbolzen und der zweite Gelenkbolzen jeweils in eine Richtung erstrecken, die von der ersten Säule zur der zweiten Säule zeigt. Es ist auch möglich, dass sich der erste Gelenkbolzen und der zweite Gelenkbolzen jeweils in eine Richtung erstrecken, die von der zweiten Säule zur der ersten Säule zeigt. Insbesondere können die sich Gelenkbolzen in eine Windanströmrichtung erstrecken oder gegen eine Windanströmrichtung erstrecken.

Besonders vorteilhaft ist eine Adaptereinheit gemäß der vorliegenden Erfindung mit einer Wischarmadaptereinheit und einer Wischblattadaptereinheit, wobei die Wischblattadaptereinheit dazu eingerichtet ist, das Wischblatt aufzunehmen und das Schwenklager sowie die Adaptergrundfläche aufweist, wobei die Wischarmadaptereinheit dazu eingerichtet ist, den Wischarm aufzunehmen und die Windabweiserfläche aufweist und bevorzugt ein Fixiermittel aufweist, wobei das Schwenklager dazu eingerichtet ist, die Wischarmadaptereinheit zu lagern. Auf diese Weise kann zu jedem Zeitpunkt einer Wischbewegung eine besonders günstige Aerodynamik eines Verbindungsbereichs zwischen Adaptereinheit und Wischblatt gewährleistet werden.

Vorteilhaft ist das Abdeckelement mit der Windabweiserfläche einstückig ausgebildet. Vorteilhaft weist das Abdeckelement ein Kopplungselement auf welches zur Verbindung mit dem Grundelement vorgesehen ist. Vorteilhaft ist das Abdeckelement mit dem Kopplungselement einstückig ausgebildet. Unter einem Grundelement soll insbesondere ein Adapter verstanden werden, das einen Kontaktbereich zum Wischblatt bzw. zu einem Wischblattbauteil aufweist und mit dem Wischblatt bzw. dem Wischblattbauteil verbindbar ist, vorteilhaft fest verbindbar ist, insbesondere so verbindbar, dass das Wischblatt in mit dem Grundelement verbundenen Zustand weitgehend nicht gegenüber dem Grundelement beweglich ist. Vorteilhaft weist das Grundelement ein Aufnahmeelement auf, welches dazu vorgesehen ist, mit dem Abdeckelement bzw. mit dem Kopplungselement des Abdeckelements zu koppeln. Vorteilhaft ist die Wischblattadaptereinheit mit dem Kontaktbereich und/oder mit dem Aufnahmeelement einstückig ausgebildet. Es ist auch denkbar, dass das Grundelement mit dem Wischblatt oder mit einem Wischblattbauteil einstückig ausgebildet ist. Vorteilhaft ist das Grundelement mit dem Schwenklager einstückig ausgebildet. Vorteilhaft ist die Schwenklager so ausgebildet, dass die Lagerachse senkrecht oder weitgehend senkrecht zu einer Wischarmrichtung angeordnet ist.

Besonders vorteilhaft ist eine Adaptereinheit aufweisend eine Wischarmadaptereinheit und eine Wischblattadaptereinheit, wobei die Wischblattadaptereinheit dazu eingerichtet ist, das Wischblatt aufzunehmen und das Schwenklager sowie die Adaptergrundfläche aufweist, wobei die Wischarmadaptereinheit dazu eingerichtet ist, den Wischarm aufzunehmen und die Windabweiserfläche aufweist, wobei das Schwenklager dazu eingerichtet ist, die Wischarmadaptereinheit zu lagern. Auf diese Weise kann zu jedem Zeitpunkt einer Wischbewegung eine besonders günstige Aerodynamik eines Verbindungsbereichs zwischen Adaptereinheit und Wischarm gewährleistet werden.

Vorteilhaft ist die Wischarmadaptereinheit mit der Windabweiserfläche und/oder mit dem Schwenklager einstückig ausgebildet. Vorteilhaft ist die Wischarmadaptereinheit fest mit den Wischarm verbindbar, insbesondere so, dass der Wischarm im mit der Wischarmadaptereinheit verbundenen Zustand weitgehend nicht gegenüber der Wischarmadaptereinheit beweglich ist.

Unter einer Wischblattadaptereinheit soll insbesondere ein Adapter verstanden werden, das einen Kontaktbereich zum Wischblatt bzw. zu einem Wischblattbauteil aufweist und mit dem Wischblatt bzw. dem Wischblattbauteil verbindbar ist, vorteilhaft fest verbindbar ist, insbesondere so verbindbar, dass das Wischblatt in mit der Wischblattadaptereinheit verbundenen Zustand weitgehend nicht gegenüber der Wischblattadaptereinheit beweglich ist. Vorteilhaft ist die Wischblattadaptereinheit mit dem Kontaktbereich und/oder mit dem Schwenklager einstückig ausgebildet. Es ist auch denkbar, dass die Wischblattadaptereinheit mit dem Wischblatt oder mit einem Wischblattbauteil einstückig ausgebildet ist.

Eine Wischvorrichtung aus einem Wischarm und einer Adaptereinheit gemäß der vorliegenden Erfindung, wobei die Adaptereinheit zu einer Kopplung, insbesondere lösbaren Kopplung mit dem Wischarm eingerichtet ist, wobei der Wischarm insbesondere eine erste Aufnahme, insbesondere eine Einbuchtung zur mechanischen Kontaktierung des als Verliersicherung eingerichteten Stützelements aufweist und/oder insbesondere eine zweite Aufnahme, insbesondere eine weitere Einbuchtung zur mechanischen Kontaktierung eines Fixiermittels aufweist, hat den Vorteil, dass auf diese Weise eine besonders stabile und sichere Verbindung zwischen dem Wischarm und dem Wischblatt gewährleistet werden kann.

### Zeichnungen

In den Zeichnungen sind Ausführungsbeispiele der Adaptereinheit gemäß der vorliegenden Erfindung sowie der Wischvorrichtung mit der erfindungsgemäßen Adaptereinheit dargestellt und in der nachfolgenden Beschreibung näher erläutert. Es zeigen
Figur 1 eine Wischvorrichtung mit einer Adaptereinheit,
Figur 2 eine Schnittansicht der Adaptereinheit,
Figur 3 eine Seitenansicht der Adaptereinheit,
Figuren 4 und 5 weitere Schnittansichten der Adaptereinheit,
Figur 6 eine Draufsicht der Wischvorrichtung und
Figur 7 eine Schnittansicht der Adaptereinheit.

### Beschreibung

In den verschiedenen Ausführungsvarianten erhalten gleiche Teile die gleichen Bezugszahlen.

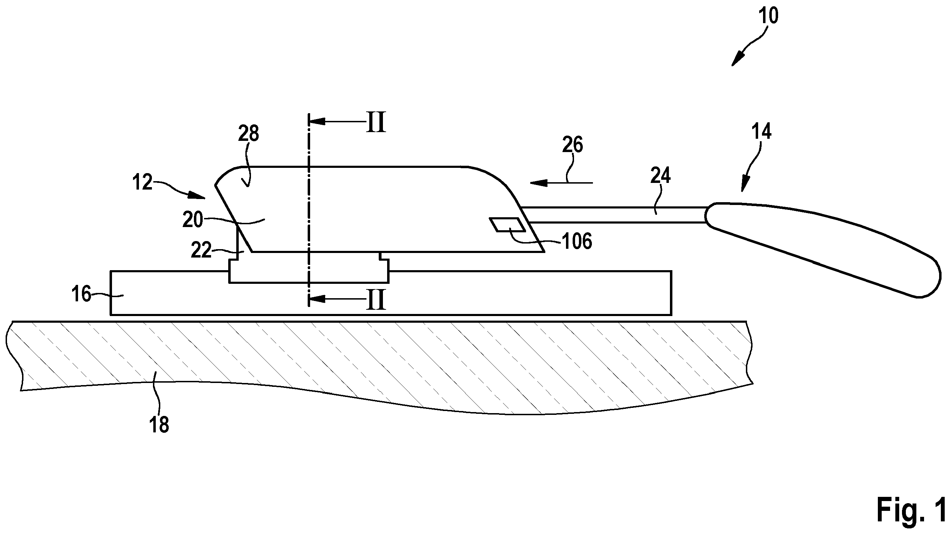

In der Figur 1 ist schematisch eine Wischvorrichtung 10 mit einer Adaptereinheit 12, einem Wischarm 14 und einem Wischblatt 16 in einer Seitenansicht gezeigt. Das Wischblatt 16 ist als Flachwischblatt ausgebildet. Das Wischblatt 16 ist zum Reinigen einer Fahrzeugscheibe 18 vorgesehen. Die Adaptereinheit 12 weist beispielsweise eine Wischarmadaptereinheit 20 auf. Die Adaptereinheit weist beispielsweise eine Wischblattadaptereinheit 22 auf. Der Wischarm 16 weist eine Wischstange 24 auf. Im Ausführungsbeispiel ist eine Hauptlängserstreckungsrichtung der Wischarmadaptereinheit parallel zu einer Wischarmrichtung 26 angeordnet. Eine Hauptlängserstreckungsrichtung des Wischblatts ist parallel zur Wischarmrichtung angeordnet. In vorteilhaften Varianten ist die Hauptlängserstreckungsrichtung der Wischarmadaptereinheit zumindest weitgehend parallel zu einer Wischarmrichtung 26 angeordnet. In vorteilhaften Varianten ist Hauptlängserstreckungsrichtung des Wischblatts ist zumindest weitgehend parallel zur Wischarmrichtung angeordnet. Die Wischarmadaptereinheit 22 weist beispielsweise eine Windabweiserfläche 28 auf.

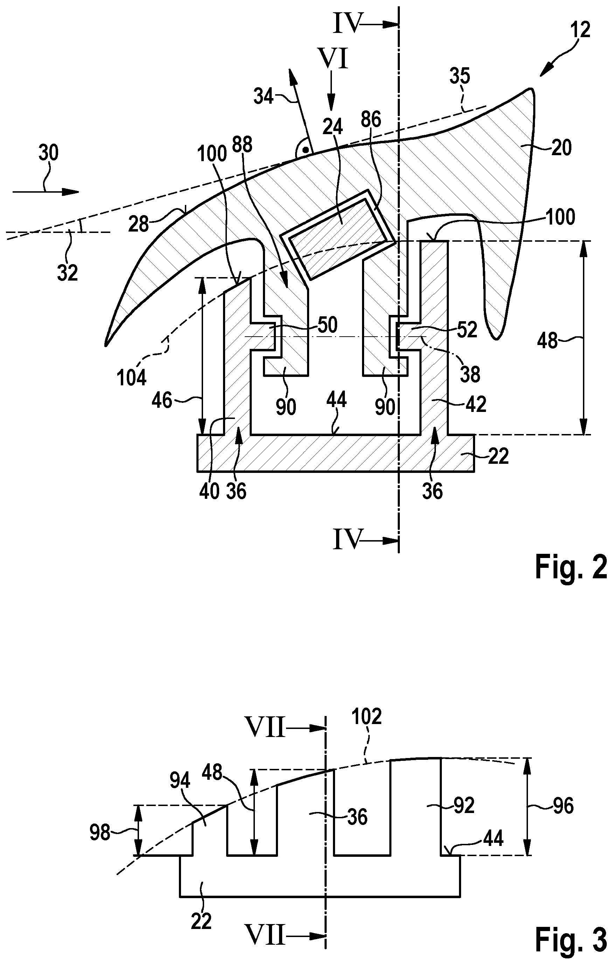

Figur 2 zeigt eine Schnittansicht auf die Adaptereinheit 12 Wischarmrichtung 26. Figur 2 ist ein entspricht Schnitt entlang der Linie II-II in Figur 1. Die Bildebene von Figur 2 ist senkrecht zur Wischarmrichtung 26 angeordnet. Die Windabweiserfläche 28 schließt mit einer Windanströmrichtung 30 einen Hauptwinkel 32 von 35° ein. Der Hauptwinkel wird zwischen der Windanströmrichtung und einer Tangentialebene eines mittleren Normalenvektors 34 der Windabweiserfläche aufgespannt. Die Tangentialebene liegt senkrecht zur Bildebene der Figur 2 bzw. parallel zur Wischarmrichtung 26 und wird in Figur 2 durch eine Schnittgrade 35 der Tangentialebene mit der Bildebene repräsentiert.

Gemäß der Erfindung ist die Windabweiserfläche der Adaptereinheit wenigstens bereichsweise konvex entlang der Windanströmrichtung ausgebildet. Darunter, dass eine Fläche der Adaptereinheit konvex ausgebildet ist, soll insbesondere verstanden werden, dass die Fläche aus der Adaptereinheit herausgewölbt ist. Gemäß der Erfindung ist die Windabweiserfläche der Adaptereinheit wenigstens bereichsweise konkav entlang der Windanströmrichtung ausgebildet. Darunter, dass eine Fläche der Adaptereinheit konkav ausgebildet ist, soll insbesondere verstanden werden, dass die Fläche in die die Adaptereinheit hineingewölbt ist.

Das Grundelement weist ein Schwenklager 36 auf, welches dazu eingerichtet ist, den Wischarm um eine Lagerachse 38 schwenkbar aufzunehmen. Das Schwenklager umfasst eine erste Säule 40. Die erste Säule 40 ist eine windzugewandte Säule. Die erste Säule ist bevorzugt senkrecht zur einer Adaptergrundfläche 44 ausgerichtet. Das Schwenklager umfasst eine zweite Säule 42. Die zweite Säule 42 ist eine windabgewandte Säule. Die zweite Säule ist bevorzugt senkrecht zur Adaptergrundfläche 44 ausgerichtet.

Die erste Säule weist beispielsweise eine erste Säulenhöhe 46 von 6 mm auf. Die zweite Säule weist beispielsweise eine zweite Säulenhöhe 48 von 10 mm auf. Die erste Säulenhöhe 46 ist kleiner als die zweite Säulenhöhe. In Varianten liegt die erste Säulenhöhe zwischen 2 mm und 10 mm, bevorzugt zwischen 4 mm und 8 mm. In Varianten liegt die zweite Säulenhöhe zwischen 6 mm und 14 mm, bevorzugt zwischen 8 mm und 12 mm. Bevorzugt ist die erste Säulenhöhe kleiner als die zweite Säulenhöhe. Die Wahl der Werte für die erste Säulenhöhe und die zweite Höhe Säulenhöhe sich nach den technischen Anforderungen an die Adaptereinheit, insbesondere nach einem vorgegebenen Hauptwinkel 32. Die erste Säule weist einen ersten Gelenkbolzen 50 auf. Die zweite Säule weist einen zweiten Gelenkbolzen 52 auf. Der erste Gelenkbolzen und der zweite Gelenkbolzen sind beispielsweise zueinander ausgerichtet. Der erste Gelenkbolzen ist bevorzugt parallel zur Lagerachse 38 angeordnet. Der zweite Gelenkbolzen ist bevorzugt parallel zur Lagerachse 38 angeordnet.

Im Ausführungsbeispiel weist die Wischarmadaptereinheit 20 eine Wischarmöffnung 86 auf, welche dazu eingerichtet ist, den Wischarm bzw. die Wischstange 24 aufzunehmen. Die Wischarmöffnung ist beispielsweise eine Öffnung für einen Aufnahmekanal, in den der Wischarm bzw. die Wischstange einführbar ist. Der Aufnahmekanal verläuft beispielsweise weitgehend parallel zur Wischarmrichtung. Die Wischarmadaptereinheit weist im Ausführungsbeispiel ein Fixiermittel 116 auf, welches zu einer lösbaren Kopplung des Wischarms mit der Wischarmadaptereinheit vorgesehen ist. Im gekoppelten Zustand ist der Wischarm fest mit der Wischarmadaptereinheit verbunden. Im mit der Wischarmadaptereinheit gekoppelten Zustand ist der Wischarm gegenüber der Wischarmadaptereinheit beispielsweise weitgehend unbeweglich. Die Wischarmadaptereinheit 20 weist beispielsweise ein Verbindungselement 88 auf, welche dazu vorgesehen ist, mit einer Wischblattadaptereinheit 22 um die Lagerachse 38 schwenkbar zu koppeln. Die Wischblattadaptereinheit 22 ist beispielhaft dazu eingerichtet, das Wischblatt 16 aufzunehmen. Die Wischblattadaptereinheit 22 weist bevorzugt das Schwenklager 36 auf. Das Schwenklager umfasst die erste Säule 40 und die zweite Säule 42. Das Verbindungselement weist beispielweise zwei zueinander parallel angeordnete Platten 90 auf. Die Platten weisen bevorzugt jeweils eine weitgehend runde Öffnung auf, welche dazu ausgebildet sind, jeweils einen Gelenkbolzen aufzunehmen. Die Platten 90 sind bevorzugt elastisch ausgebildet und besonders bevorzugt zueinander elastisch auslenkbar. Auf diese Weise ist es insbesondere möglich, das Verbindungselement in das Schwenklager einzurasten. Beim Montieren der Wischarmadaptereinheit auf die Wischblattadaptereinheit werden die Platten in einen Innenbereich zwischen den Säulen eingeführt und elastisch zueinander bewegt. Beim Einführen nehmen die Öffnungen der Platten jeweils einen Gelenkbolzen auf und die Platten werden elastisch zueinander parallel ausgerichtet. Im Ausführungsbeispiel ist die Wischarmöffnung 86 weitgehend zwischen den Platten 90 angeordnet. Das hat den Vorteil, dass die Platten 90 in einem mit dem Wischarm bzw. der Wischstange 24 montierten Zustand versteift werden. Auf diese Weise kann die Verbindung zwischen dem Verbindungselement 88 und dem Schwenklager 36 verbessert werden, insbesondere in einem montierten Zustand, in dem der Wischarm bzw. die Wischstange 24 in der Wischarmöffnung 86 angebracht ist.

Figur 3 zeigt eine Ansicht auf das Ausführungsbeispiel des Wischblattadapters 22 aus Figur 1 aus der gleichen Perspektive wie in Figur 1. Die Wischblattadaptereinheit 22 weist ein erstes Stützelement 92 auf. Das erste Stützelement ist beispielweise senkrecht auf der Adaptergrundfläche 44 angeordnet. Die Wischblattadaptereinheit 22 weist ein zweites Stützelement 94 auf. Das zweite Stützelement ist beispielweise senkrecht auf der Adaptergrundfläche 44 angeordnet. Das erste Stützelement hat beispielhaft eine erste Höhe 96 von 12 mm. Die erste Höhe des ersten Stützelements liegt in Varianten zwischen 8 mm und 16 mm, bevorzugt zwischen 10 mm und 14 mm. Das zweite Stützelement hat beispielhaft eine zweite Höhe 98 von 7 mm. Die zweite Höhe des zweiten Stützelements liegt in Varianten zwischen 3 mm und 11 mm, bevorzugt zwischen 5 mm und 9 mm. Im in Figur 3 gezeigten Ausführungsbeispiel ist das zweite Stützelement 94 ein wischarmabgewandtes Stützelement. Im in Figur 3 gezeigten Ausführungsbeispiel ist das erste Stützelement 92 ein wischarmzugewandtes Stützelement. Bevorzugt ist die zweite Höhe 98 des zweiten Stützelements 94 kleiner als die erste Höhe 96 des ersten Stützelements 92. Im Ausführungsbeispiel sind beispielhaft das erste Stützelement 92, das Schwenklager 36 und das zweite Stützelement 94 entlang der Wischarmrichtung 26 angeordnet. Bevorzugt sind das erste Stützelement 92, das Schenklager 36 und das zweite Stützelement 94 weitgehend entlang der Wischarmrichtung 26 angeordnet. Beispielhaft ist das Schwenklager 36 zwischen dem ersten Stützelement 92 und dem zweiten Stützelement 94 angeordnet.

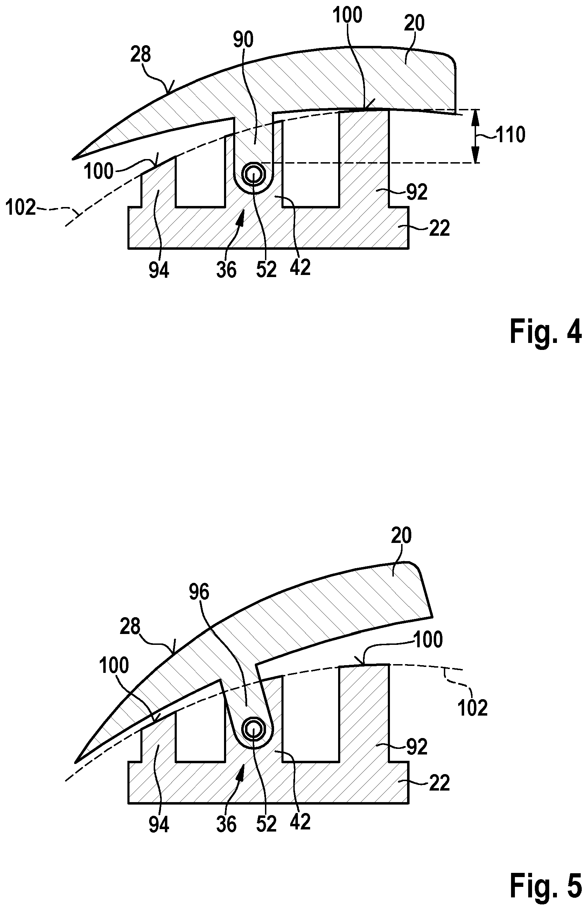

Die Wischarmadaptereinheit 20 ist im Ausführungsbeispiel über das Schwenklager 36 um die Lagerachse 38 schwenkbar mit der Wischblattadaptereinheit 22 verbunden. Beispielhaft sind das erste Stützelement 92 und das zweite Stützelement 94 dazu eingerichtet, die Wischarmadaptereinheit 20 zu stützen. Auf diese Weise sind das erste Stützelement 92 und das zweite Stützelement 94 dazu eingerichtet, die Windabweiserfläche 28 zu stützten. In Figur 4 ist ein Schnitt entlang der Linie IV-IV in Figur 2 dargestellt. In der in Figur 4 dargestellten Position der Wischarmadaptereinheit 20 wird die Wischarmadaptereinheit 20 bzw. die Windabweiserflläche 28 durch das erste Stützelement 92 gestützt. Das erste Stützelement 92 weist eine Oberseite 100 auf. Die Oberseite 100 ist insbesondere zur mechanischen Kontaktierung der Wischarmadaptereinheit 20 bzw. der Windabweiserfläche 28 vorgesehen. Eine Oberseite 100 ist eine Kontaktfläche. In der in Figur 4 dargestellten Position der Wischarmadaptereinheit 20 stützt sich die Wischarmadaptereinheit 20 bzw. die Windabweiserfläche 28 auf der Oberseite 100 des ersten Stützelements 92 ab. In der in Figur 4 dargestellten Position der Wischarmadaptereinheit 20 kontaktiert die Wischarmadaptereinheit 20 die Oberseite 100 des ersten Stützelements 92.

In Figur 5 ist die Adaptereinheit aus Figur 4 in einer anderen Position abgebildet. In Figur 5 ist die Wischarmadaptereinheit 20 gegenüber der in Figur 4 abgebildeten Position um die Lagerachse 38 gedreht. In der in Figur 5 dargestellten Position der Wischarmadaptereinheit 20 wird die Wischarmadaptereinheit 20 bzw. die Windabweiserfläche 28 durch das zweite Stützelement 94 gestützt. Das zweite Stützelement 94 weist eine Oberseite 100 auf. Die Oberseite 100 ist insbesondere zur mechanischen Kontaktierung der Wischarmadaptereinheit 20 bzw. der Windabweiserfläche 28 vorgesehen. In der in Figur 5 dargestellten Position der Wischarmadaptereinheit 20 stützt sich die Wischarmadaptereinheit 20 bzw. die Windabweiserfläche 28 auf der Oberseite 100 des zweiten Stützelements 94 ab. In der in Figur 5 dargestellten Position der Wischarmadaptereinheit 20 kontaktiert die Wischarmadaptereinheit 20 die Oberseite 100 des zweiten Stützelements 94.

Im Ausführungsbeispiel ist die Oberseite 100 des ersten Stützelements entlang eines ersten Kreisbogens 102 angeordnet. Der ersten Kreisbogen 102 hat beispielsweise einen ersten Radius von 22 cm. Der erste Kreisbogen 102 ist beispielhaft senkrecht zur Lagerachse 36 angeordnet. Im Ausführungsbeispiel ist die Oberseite 10 des zweiten Stützelements entlang des ersten Kreisbogens 102 angeordnet. In vorteilhaften Varianten ist die Oberseite des ersten Stützelements und/oder die Oberseite des zweiten Stützelements wenigstens abschnittweise entlang des ersten Kreisbogens angeordnet. In besonderen Varianten ist der erste Kreisbogen bzw. ein erster Kreis, welcher den ersten Kreisbogen aufweist weitgehend senkrecht zur Lagerachse angeordnet.

Im Ausführungsbeispiel weise die erste Säule 40 und die zweite Säule 42 des Schwenklagers jeweils eine Oberseite 100 auf. Die Oberseite 100 der ersten Säule und die Oberseite 100 der zweiten Säule sind jeweils entlang eines zweiten Kreisbogens 104 angeordnet (siehe Figur 2). Der zweite Kreisbogen 104 hat beispielsweise einen zweiten Radius von 22 mm. Der zweite Kreisbogen 104 ist beispielhaft senkrecht zur Wischarmrichtung 26 angeordnet. In vorteilhaften Varianten ist die Oberseite des ersten Stützelements und/oder die Oberseite des zweiten Stützelements und/oder die Oberseiten von wenigstens einer Säule des Schwenklagers wenigstens abschnittweise entlang des zweiten Kreisbogens angeordnet. In besonderen Varianten ist der zweite Kreisbogen bzw. ein zweiter Kreis, welcher den zweiten Kreisbogen aufweist weitgehend senkrecht zur Wischarmrichtung angeordnet. In besonderen Varianten ist der zweite Kreisbogen bzw. ein zweiter Kreis, welcher den zweiten Kreisbogen aufweist parallel oder weitgehend parallel zur Lagerachse angeordnet.

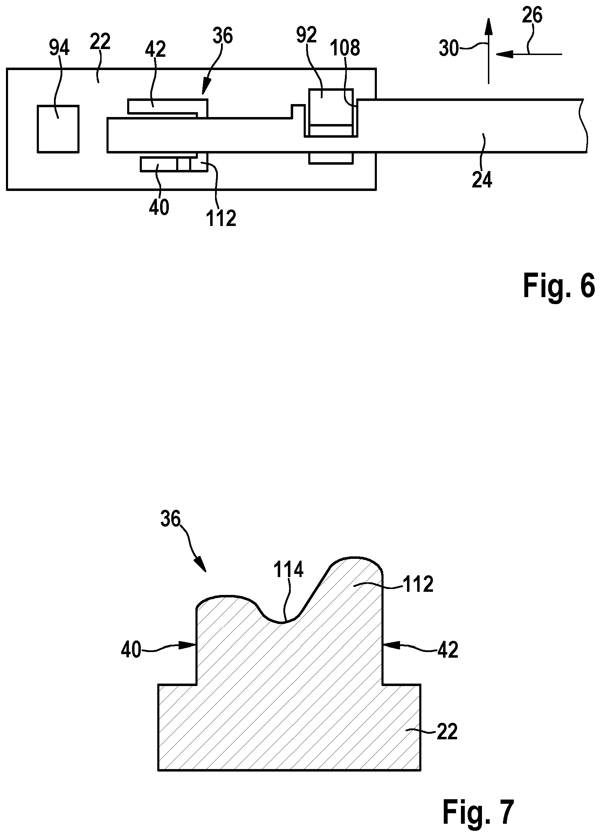

Das erste Stützelement 92 ist im Ausführungsbeispiel beispielhaft als Verliersicherung für den Wischarm 14 eingerichtet. Figur 6 zeigt eine Ansicht auf die Adaptereinheit entlang der Richtung VI in Figur 2. Die Richtung VI ist senkrecht zur Wischarmrichtung 26 und senkrecht zur Lagerachse 38 angeordnet. Der Übersicht halber ist die Wischarmadaptereinheit 20 nicht abgebildet. Figur 6 illustriert die Funktion des ersten Stützelements als Verliersicherung. Die Wischstange 24 ist innerhalb der Wischarmöffnung 86 angeordnet (nicht in Figur 6 abgebildet, siehe Figur 2) und dadurch im montierten Zustand weitgehend unbeweglich in oder gegen die Windanströmrichtung 30. Die Wischarmadaptereinheit 20 weist ein Fixiermittel 106 auf (siehe Figur 1). Im Ausführungsbeispiel ist das Fixiermittel 106 beispielhaft als Rastknopf ausgebildet, welcher dazu vorgesehen ist, die Wischstange gegen eine Bewegung in Wischarmrichtung 26 zu fixieren.

Die Wischstange ist im Ausführungsbeispiel zusätzlich durch das erste Stützelement gegen eine Bewegung in Wischarmrichtung gesichert. Auf diese Weise wird eine sichere Befestigung des Wischarms an der Adaptereinheit gewährleistet, insbesondere falls das Fixiermittel versagen sollte. Die Wischstange weist beispielhaft eine Einbuchtung 108 auf. Im Ausführungsbeispiel umgreift die Einbuchtung 108 im montierten Zustand in der in den Figuren 4 und 6 abgebildeten Position teilweise das erste Stützelement 92. Auf diese Weise ist ein Verschieben der Wischstange in Wischarmrichtung nicht möglich, da die Wischstang durch das erste Stützelement 92 fixiert wird. Die Wischstange kann vom Adapter gelöst werden, indem das Wischarmadapter 20 in die in Figur 5 gezeigte Position gedreht wird. Auf diese Weise wird die Wischstange über das erste Stützelement 92 angehoben. In der in Figur 5 gezeigten Position ist das erste Stützelement 92 nicht mehr innerhalb der Einbuchtung 108 angeordnet. In der in Figur 5 gezeigten Position ist die Wischstange aus dem Adapter herausziehbar, gegebenenfalls ist dazu noch ein Betätigen des Fixiermittels 106 notwendig.

Die Einbuchtung 108 ist eine erste Aufnahme. Im Ausführungsbeispiel weist die Wischstange beispielhaft eine weitere Einbuchtung auf, welche dazu vorgesehen ist, mechanisch an das Fixiermittel 106 zu koppeln. Insbesondere kann ein als Rastknopf ausgebildetes Fixiermittel 106 in die weitere Einbuchtung einrasten. Die weitere Einbuchtung ist eine zweite Aufnahme.

Im Ausführungsbeispiel weist die Oberseite 100 des als Verliersicherung eingerichteten ersten Stützelements 92 beispielsweise einen Höhenversatz 110 von 3 mm zum zweiten Gelenkbolzen 52 auf (siehe Figur 4).

Figur 7 zeigt eine Schnittdarstellung der Wischblattadaptereinheit 22 auf Figur 3 entlang der Linie VII-VII. Das Schwenklager 36 weist beispielhaft eine Stützwand 112. Die Stützwand 112 ist zwischen der ersten Säule 40 und der ersten Säule 42 angeordnet. Vorteilhaft ist die Stützwand 112 einstückig mit der erste Säulen und/oder mit der zweiten Säule ausgebildet. Im Ausführungsbeispiel weist die Stützwand 112 eine V-förmige Aussparung 114 auf. Die V-förmige Aussparung ist zur mechanischen Kontaktierung der Wischstange vorgesehen. In der in Figur 4 abgebildeten Position der Wischarmadaptereinheit 20 wird die Wischstange im montierten Zustand von der V-förmigen Aussparung 114 gestützt.

In vorteilhaften Ausführungsformen weist die Windabweiserfläche 28 eine veränderte bzw. besondere Oberflächenstruktur auf. Die Oberfläche kann wenigstens bereichsweise aufgeraut sein und/oder eine Haifischhautstruktur aufweisen und/oder eine Golfballstruktur aufweisen. Eine solche Oberflächenstruktur beeinflusst den über sie strömenden Luftstrom. Auf diese Weise lassen sich die aerodynamischen Eigenschaften der Windabweiserfläche verbessern. Insbesondere ist es möglich, über die Windabweiserfläche wirkende Anpresskräfte durch eine Auswahl der Art und Anordnung der veränderten Oberflächenstruktur präzise einzustellen.

## Patentansprüche

1. Adaptereinheit (12), die zu einer Kopplung, insbesondere lösbaren Kopplung eines Wischblatts (16) mit einem Wischarm (14) vorgesehen ist, aufweisend eine Windabweiserfläche (28), welche dazu eingerichtet ist, eine anströmende Luft abzuweisen und das Wischblatt an eine Fahrzeugscheibe zu drücken, wobei die Adaptereinheit wenigstens zwei auf der Adaptergrundfläche angeordnete Stützelemente aufweist, welche dazu eingerichtet sind, die Windabweiserfläche zu stützen bzw. mechanisch zu kontaktieren, wobei ein wischarmabgewandtes Stützelement der wenigstens zwei Stützelement eine geringere Höhe hat als ein wischarmzugewandtes Stützelement der wenigstens zwei Stützelemente, insbesondere, dass eine jeweilige Höhe der wenigstens zwei Stützelemente einem Höhenverlauf der Windabweiserfläche entspricht, wobei die Windabweiserfläche wenigstens bereichsweise konvex und wenigstens bereichsweise konkav entlang der Windanströmrichtung ausgebildet ist **dadurch gekennzeichnet, dass** die Adaptereinheit (12) zusätzlich ein Schwenklager (36) aufweist, welcher dazu eingerichtet ist, den Wischarm (14) gegenüber dem Wischblatt (16) schwenkbar zu lagern, wobei das Schwenklager (36) wenigstens zwei weitgehend senkrecht auf einer Adaptergrundfläche angeordnete Saülen (40, 42) aufweist, wobei jede der Säulen (40, 42) jeweils einen Gelenkbolzen (50, 52) aufweist, welche parallel oder weitgehend parallel zu einer Lagerachse (38) ausgerichtet ist und zur Lagerung des Wischarms (14) und/oder einer Wischarmadaptereinheit (12) vorgesehen ist, und wobei das Schwenklager zumindest weitgehend zwischen den wenigstens zwei Stützelementen (92, 94) angeordnet ist und wobei das Schwenklager eine V-förmige Aussparung (114) aufweist, welche zur Führung bzw. zur Stützung und/oder mechanischen Kontaktierung des Wischarms vorgesehen ist.

2. Adaptereinheit nach Anspruch 1, **dadurch gekennzeichnet, dass** die Windabweiserfläche einen Hauptwinkel zwischen 25° und 65°, bevorzugt zwischen 40° und 50° mit der Lagerachse einschließt.

3. Adaptereinheit nach einem der vorhergehenden Ansprüche, **dadurch gekennzeichnet, dass** wenigstens eine der wenigstens zwei Säulen eine Höhe aufweist, deren Wert zwischen der Höhe des wischarmabgewandten Stützelements und der Höhe des wischarmzugewandten Stützelements liegt, insbesondere, dass die Höhe der wenigstens einen der wenigstens zwei Säulen einem Höhenverlauf der Windabweiserfläche entspricht.

4. Adaptereinheit nach einem der vorhergehenden Ansprüche, **dadurch gekennzeichnet, dass** die jeweiligen Oberseiten des wischarmzugewandten Stützelements und/oder des wischarmabgewandten Stützelements und/oder von wenigstens einer der wenigstens zwei Säulen wenigstens abschnittsweise auf einem ersten Kreisbogen mit einem ersten Radius zwischen 10 cm und 35 cm, bevorzugt zwischen 15 cm und 30 cm, besonders bevorzugt zwischen 20 cm und 25 cm angeordnet sind, wobei eine erste Kreisfläche des ersten Kreisbogens bevorzugt senkrecht oder weitgehend senkrecht zur Lagerachse angeordnet ist.

5. Adaptereinheit nach einem der vorhergehenden Ansprüche, **dadurch gekennzeichnet, dass** die jeweiligen Oberseiten des wischarmzugewandten Stützelements und/oder des wischarmabgewandten Stützelements und/oder von wenigstens einer der wenigstens zwei Säulen wenigstens abschnittsweise auf einem zweiten Kreisbogen mit einem zweiten Radius zwischen 10 mm und 35 mm, bevorzugt zwischen 15 mm und 30 mm, besonders bevorzugt zwischen 20 mm und 25 mm angeordnet sind, wobei eine zweite Kreisfläche des zweiten Kreisbogens bevorzugt parallel oder weitgehend parallel zur Lagerachse angeordnet ist, besonders bevorzugt senkrecht oder weitgehend senkrecht zu einer Wischarmrichtung angeordnet ist.

6. Adaptereinheit nach einem der vorhergehenden Ansprüche, **dadurch gekennzeichnet, dass** eine Oberseite eines als Verliersicherung eingerichteten Stützelements wenigstens einen Gelenkbolzen der wenigstens zwei Säulen um einen Höhenversatz von wenigstens 2 mm, bevorzugt wenigstens 4 mm, besonders bevorzugt wenigstens 6 mm überragt.

7. Adaptereinheit nach einem der vorhergehenden Ansprüche, **dadurch gekennzeichnet, dass** die Gelenkbolzen der wenigstens zwei Säulen zueinander ausgerichtet sind.

8. Adaptereinheit nach einem der vorhergehenden Ansprüche, **gekennzeichnet durch** eine Wischarmadaptereinheit und eine Wischblattadaptereinheit, wobei die Wischblattadaptereinheit dazu eingerichtet ist, das Wischblatt aufzunehmen und das Schwenklager sowie die Adaptergrundfläche aufweist, wobei die Wischarmadaptereinheit dazu eingerichtet ist, den Wischarm aufzunehmen und die Windabweiserfläche aufweist und bevorzugt ein Fixiermittel aufweist, wobei das Schwenklager dazu eingerichtet ist, die Wischarmadaptereinheit zu lagern.

9. Wischvorrichtung aus einem Wischarm und einer Adaptereinheit nach einem der vorhergehenden Ansprüche, wobei die Adaptereinheit zu einer Kopplung, insbesondere lösbaren Kopplung mit dem Wischarm eingerichtet ist, wobei der Wischarm insbesondere eine erste Aufnahme, insbesondere eine Einbuchtung (108) zur mechanischen Kontaktierung des als Verliersicherung eingerichteten Stützelements aufweist und/oder insbesondere eine zweite Aufnahme, insbesondere eine weitere Einbuchtung zur mechanischen Kontaktierung eines Fixiermittels aufweist.

## Claims

1. Adapter unit (12) which is provided for coupling, in particular releasably coupling, a wiper blade (16) to a wiper arm (14), having a wind deflector surface (28) which is designed to deflect an incident flow of air and to press the wiper blade against a vehicle windscreen,
wherein the adapter unit
has at least two support elements which are arranged on the adapter basic surface and are designed to support or mechanically contact the wind deflector surface,
wherein a wiper-arm-remote support element of the at least two support elements has a lower height than a wiper-arm-facing support element of the at least two support elements, in particular in that a respective height of the at least two support elements corresponds to a vertical profile of the wind deflector surface, wherein the wind deflector surface is at least partially convex and at least partially concave along the wind inflow direction, **characterized in that** the adapter unit (12) additionally has a pivot bearing (36) which is designed to pivotably support the wiper arm (14) in relation to the wiper blade (16), wherein the pivot bearing (36) has at least two columns (40, 42) which are arranged substantially perpendicular to an adapter basic surface, wherein each of the columns (40, 42) has a hinge pin (50, 52) which is oriented parallel or substantially parallel to a bearing axis (38) and is provided for mounting the wiper arm (14) and/or a wiper arm adapter unit (12), and wherein the pivot bearing is arranged at least substantially between the at least two support elements (92, 94), and wherein
the pivot bearing has a V-shaped recess (114) which is provided for guiding and/or for supporting and/or mechanically contacting the wiper arm.

2. Adapter unit according to Claim 1, **characterized in that** the wind deflector surface encloses a main angle of between 25° and 65°, preferably of between 40° and 50°, with the bearing axis.

3. Adapter unit according to either of the preceding claims, **characterized in that** at least one of the at least two columns has a height, the value of which lies between the height of the wiper-arm-remote support element and the height of the wiper-arm-facing support element, in particular **in that** the height of the at least one of the at least two columns corresponds to a vertical profile of the wind deflector surface.

4. Adapter unit according to one of the preceding claims, **characterized in that** the respective upper sides of the wiper-arm-facing support element and/or of the wiper-arm-remote support element and/or of at least one of the at least two columns are arranged at least in sections on a first arc of a circle with a first radius between 10 cm and 35 cm, preferably between 15 cm and 30 cm, particularly preferably between 20 cm and 25 cm, wherein a first circular surface of the first arc of the circle is preferably arranged perpendicular or substantially perpendicular to the bearing axis.

5. Adapter unit according to one of the preceding claims, **characterized in that** the respective upper sides of the wiper-arm-facing support element and/or of the wiper-arm-remote support element and/or of at least one of the at least two columns are arranged at least in sections on a second arc of a circle with a second radius of between 10 mm and 35 mm, preferably between 15 mm and 30 mm, particularly preferably between 20 mm and 25 mm, wherein a second circular surface of the second arc of the circle is preferably arranged parallel or substantially parallel to the bearing axis, particularly preferably is arranged perpendicular or substantially perpendicular to a wiper arm direction.

6. Adapter unit according to one of the preceding claims, **characterized in that** an upper side of a support element which is designed as a captive securing means protrudes over at least one hinge pin of the at least two columns by a height offset of at least 2 mm, preferably at least 4 mm, particularly preferably at least 6 mm.

7. Adapter unit according to one of the preceding claims, **characterized in that** the hinge pins of the at least two columns are aligned with each other.

8. Adapter unit according to one of the preceding claims, **characterized by** a wiper arm adapter unit and a wiper blade adapter unit, wherein the wiper blade adapter unit is designed to receive the wiper blade and has the pivot bearing and the adapter basic surface, wherein the wiper arm adapter unit is designed to receive the wiper arm and has the wind deflector surface and preferably has a securing means, wherein the pivot bearing is designed to support the wiper arm adapter unit.

9. Wiper device consisting of a wiper arm and an adapter unit according to one of the preceding claims, wherein the adapter unit is designed for coupling, in particular releasably coupling, to the wiper arm, wherein the wiper arm in particular has a first receptacle, in particular an indentation (108) for mechanically contacting the support element designed as a captive securing means, and/or in particular has a second receptacle, in particular a further indentation, for mechanically contacting a securing means.

## Revendications

1. Unité formant adaptateur (12), qui est prévue pour un accouplement, en particulier un accouplement libérable d'un balai d'essuie-glace (16) à un bras d'essuie-glace (14), comportant une surface de déflexion d'air (28), laquelle est conçue pour dévier de l'air incident et pour presser le balai d'essuie-glace contre une vitre de véhicule,
l'unité formant adaptateur
comportant au moins deux éléments de soutien disposés sur la surface de base d'adaptateur, qui sont conçus pour soutenir ou entrer en contact mécanique avec la surface de déflexion d'air,
un élément de soutien, opposé au bras d'essuie-glace, des au moins deux éléments de soutien ayant une hauteur inférieure à celle d'un élément de soutien, tourné vers le bras d'essuie-glace, des au moins deux éléments de soutien, une hauteur respective des au moins deux éléments de soutien correspondant en particulier à un profil de hauteur de la surface de déflexion d'air, la surface de déflexion d'air étant formée au moins par endroits de manière convexe et au moins par endroits de manière concave le long de la direction d'écoulement de l'air, **caractérisée en ce que** l'unité formant adaptateur (12) comporte en supplément un palier pivotant (36), qui est conçu pour monter le bras d'essuie-glace (14) de manière pivotante par rapport au balai d'essuie-glace (16), le palier pivotant (36) comportant au moins deux montants (40, 42) disposés dans une large mesure perpendiculairement à une surface de base d'adaptateur, chacun des montants (40, 42) comportant respectivement un axe d'articulation (50, 52), qui est orienté parallèlement ou dans une large mesure parallèlement à un axe de palier (38) et est prévu pour le montage du bras d'essuie-glace (14) et/ou d'une unité formant adaptateur de bras d'essuie-glace (12), et le palier pivotant étant disposé au moins dans une large mesure entre les au moins deux éléments de soutien (92, 94), et
le palier pivotant comportant un évidement (114) en forme de V, qui est prévu pour le guidage ou le soutien et/ou le contact mécanique du bras d'essuie-glace.

2. Unité formant adaptateur selon la revendication 1, **caractérisée en ce que** la surface de déflexion d'air forme avec l'axe de palier un angle principal entre 25° et 65°, de préférence entre 40° et 50°.

3. Unité formant adaptateur selon l'une des revendications précédentes, **caractérisée en ce qu'**au moins un des au moins deux montants présente une hauteur dont la valeur se situe entre la hauteur de l'élément de soutien opposé au bras d'essuie-glace et la hauteur de l'élément de soutien tourné vers le bras d'essuie-glace, en particulier que la hauteur de l'au moins un des au moins deux montants correspond à un profil de hauteur de la surface de déflexion d'air.

4. Unité formant adaptateur selon l'une des revendications précédentes, **caractérisée en ce que** les côtés supérieurs respectifs de l'élément de soutien tourné vers le bras d'essuie-glace et/ou de l'élément de soutien opposé au bras d'essuie-glace et/ou d'au moins un des au moins deux montants sont disposés au moins dans certaines parties sur un premier arc de cercle avec un premier rayon entre 10 cm et 35 cm, de préférence entre 15 cm et 30 cm, de manière particulièrement préférée entre 20 cm et 25 cm, une première surface circulaire du premier arc de cercle étant disposée de préférence perpendiculairement ou dans une large mesure perpendiculairement à l'axe de palier.

5. Unité formant adaptateur selon l'une des revendications précédentes, **caractérisée en ce que** les côtés supérieurs respectifs de l'élément de soutien tourné vers le bras d'essuie-glace et/ou de l'élément de soutien opposé au bras d'essuie-glace et/ou d'au moins un des au moins deux montants sont disposés au moins dans certaines parties sur un deuxième arc de cercle avec un deuxième rayon entre 10 mm et 35 mm, de préférence entre 15 mm et 30 mm, de manière particulièrement préférée entre 20 mm et 25 mm, une deuxième surface circulaire du deuxième arc de cercle étant disposée de préférence parallèlement ou dans une large mesure parallèlement à l'axe de palier, étant disposée de manière particulièrement préférée perpendiculairement ou dans une large mesure perpendiculairement à une direction de bras d'essuie-glace.

6. Unité formant adaptateur selon l'une des revendications précédentes, **caractérisée en ce qu'**un côté supérieur d'un élément de soutien conçu sous la forme d'une fixation imperdable dépasse au-delà d'au moins un axe d'articulation des au moins deux montants d'un décalage en hauteur d'au moins 2 mm, de préférence d'au moins 4 mm, de manière particulièrement préférée d'au moins 6 mm.

7. Unité formant adaptateur selon l'une des revendications précédentes, **caractérisée en ce que** les axes d'articulation des au moins deux montants sont orientés l'un vers l'autre.

8. Unité formant adaptateur selon l'une des revendications précédentes, **caractérisée par** une unité formant adaptateur de bras d'essuie-glace et une unité formant adaptateur de balai d'essuie-glace, l'unité formant adaptateur de balai d'essuie-glace étant conçue pour loger le balai d'essuie-glace et comportant le palier pivotant ainsi que la surface de base d'adaptateur, l'unité formant adaptateur de bras d'essuie-glace étant conçue pour loger le bras d'essuie-glace et comportant la surface de déflexion d'air et comportant de préférence un moyen de fixation, le palier pivotant étant conçu pour supporter l'unité formant adaptateur de bras d'essuie-glace.

9. Dispositif d'essuie-glace constitué d'un bras d'essuie-glace et d'une unité formant adaptateur selon l'une des revendications précédentes, l'unité formant adaptateur étant conçue pour un accouplement, en particulier un accouplement libérable au bras d'essuie-glace, le bras d'essuie-glace comportant en particulier un premier logement, en particulier un renfoncement (108) servant à la mise en contact mécanique de l'élément de soutien conçu sous la forme d'une fixation imperdable et/ou en particulier un deuxième logement, en particulier un autre renfoncement servant à la mise en contact mécanique d'un moyen de fixation.
